# EUROPEAN PATENT SPECIFICATION

(11) **EP 0 460 702 B1**
(45) Date of publication and mention of the grant of the patent: **03.04.1996**
(21) Application number: 91109364.9
(22) Date of filing: 07.06.1991
(51) Int. Cl.: G11B 5/48, G11B 5/53, G11B 5/187, G11B 5/255

(54) **Magnetic head**
Magnetkopf
Tête magnétique

(30) Priority: 08.06.1990 JP 150950/90
(43) Date of publication of application: 11.12.1991
(73) Proprietor: MATSUSHITA ELECTRIC INDUSTRIAL CO., LTD., Kadoma-shi, Osaka-fu, 571 (JP)
(72) Inventor: Mizoh, Yoshiaki, Neyagawa-shi, Osaka (JP); Yohda, Hiroshi, Hirakata-shi, Osaka (JP)
(74) Representative: Morgan, James Garnet

(56) References cited:
- US-A- 4 722 015
- PATENT ABSTRACTS OF JAPAN, vol. 12, no. 295 (P-743)[3142], 11th August 1988;& JP-A-63 069 014 (NEC KANSAI LTD) 29-03-1988
- PATENT ABSTRACTS OF JAPAN, vol. 10, no. 351 (P-520)[2407], 27th November 1986;& JP-A-61 150 113 (PIONEER ELECTRONIC CORP.) 08-07-1986
- PATENT ABSTRACTS OF JAPAN, vol. 13, no. 85 (P-834)[3433], 27th February 1989;
- & JP-A-63 266 622 (TOSHIBA CORP.) 02-11-1988
- PATENT ABSTRACTS OF JAPAN, vol. 13, no. 185 (P-865)[3533], 2nd May 1989;& JP-A-1 013 211 (TOSHIBA CORP.) 18-01-1989

## Description

### BACKGROUND OF THE INVENTION

### Field of the Invention:

The present invention relates to a magnetic head for use in audio, video, computer, and other applications, and more particularly to a magnetic head which is of such a structure as to keep good sliding contact with a magnetic tape for recording and reproducing signals at a high rate.

### Description of the Prior Art:

Recent magnetic recording and reproducing apparatus with rotary head drums for helical scan employ dedicated multitrack magnetic heads for recording and reproducing wide-band video signals, FM audio signals, PCM audio signals, and for erasing signals by flying erasure.

Generally, a helical-scan magnetic recording and reproducing system employs a plurality of magnetic head tips disposed closely to each other and mounted in one window or recess in the outer circumferential surface of a rotary head drum or cylinder. The configuration of projecting portions of the head tips, and the curvature thereof in a direction transverse to the tracks are optimized for uniform contact with the magnetic tape.

Each of the magnetic head tips may be a ferrite head tip or a laminated head tip. The laminated head tip comprises a metallic magnetic body or layer sandwiched between nonmagnetic substrates, the metallic magnetic body defining a magnetic path. A head having the precharacteristic features of claim 1 is disclosed in JP-A-63-69014.

To meet recent demands for long-time, high-capacity recording capabilities, thinner magnetic tapes for use in magnetic recording systems are under development. It is known, however, that the stiffness of a magnetic tape decreases in inverse proportion to the cube of the thickness thereof.

When signals are recorded on and reproduced from a standard-time recording thick magnetic tape with multitrack magnetic heads, the front configuration or contour of the head tips wears into a large radius of curvature in its transverse direction because of intimate contact with the thick magnetic tape. In general, when successive magnetic head tips are held in sliding contact with a magnetic tape, the leading head tip which is brought into initial sliding contact with the magnetic tape is subject to higher pressure than the trailing head tip which is brought into subsequent sliding contact with the magnetic tape. The higher pressure is developed because the magnetic tape flexes due to an air stream caused by the rotation of the head drum and also because the magnetic tape and the magnetic head tips move relatively to each other. Particularly, since the magnetic head tips are made of the same material, the leading head tip with respect to the direction of rotation of the head drum wears to a larger extent than the trailing head tip. Consequently, the transverse radius of curvature of the leading head tip becomes greater than that of the trailing head tip. When signals are subsequently recorded on and reproduced from a long-time recording thinner magnetic tape with the same head tips, since the thinner magnetic tape is of lower stiffness, it flexes greatly in the transverse direction, and is not sufficiently held in good contact with the leading head tip. As a result, the spacing loss is increased, and the reproduced output of the leading head tip is lower in level than the reproduced output of the trailing head tip. The reduction in the reproduced output of the leading head tip can be observed as a deterioration of the output waveform envelope.

There has heretofore been an attempt to reduce the radius of curvature of leading head tips in the transverse direction for solving the above problems. The radius of curvature greatly varies as the magnetic head tips wear, and different magnetic heads wear to different degrees as the wear progresses, resulting in different radii of curvature thereof. Therefore, the prior attempt has proven ineffective in completely eliminating the aforesaid drawbacks.

### SUMMARY OF THE INVENTION

It is an object of the present invention to provide a magnetic head which will prevent the reproduced output of a leading magnetic head from being reduced when used in a multitrack magnetic head application for helical scanning of a magnetic tape.

According to the present invention, there is provided a multitrack magnetic head for use with a magnetic tape, comprising at least two magnetic head tips disposed adjacent to each other, the head tips being movable with respect to the magnetic tape and including a leading head tip for initial sliding contact with the magnetic tape and a trailing head tip for subsequent sliding contact with the magnetic tape, the leading head tip being made of a material whose wear resistance is greater than that of a material of which the trailing head tip is made.

The wear resistance is measured in terms of specific wear. When a magnetic tape and a magnetic head relatively move in sliding contact with each other, the magnetic head wears in proportion to the pressure under which it is contacted by the magnetic tape. When a magnetic tape runs against a conventional multitrack magnetic head which has leading and trailing head tips of the same material, since the pressure applied to the leading head tip is higher than that which is applied to the trailing head tip, the leading head tip undergoes greater wear than the trailing head tip, and wears into a greater radius of curvature in the radial direction. With the magnetic head according to the present invention, since the specific wear of the leading head tip is smaller than that of the trailing head tip, the leading head tip may wear to substantially the same extent as that of the trailing head tip.
Consequently, the transverse radius of curvature of the leading head tip remains substantially the same as that of the trailing head tip, so that the leading head tip is held in sliding contact with the magnetic tape in substantially the same manner as the leading head tip is held in sliding contact with the magnetic tape. Any appreciable reduction which would otherwise be produced in the reproduced output of the leading head tip can thus be prevented from occurring.

The higher wear resistance of the material of the leading head tip than that of the material of the trailing head tip allows the magnetic head to be held in good sliding contact with the magnetic tape, thus preventing a reduction in the reproduced output of the leading head tip owing to a spacing loss, and hence a deterioration of the waveform envelope of the reproduced output of the leading head tip. Even though the head tips are worn, their configurations for sliding contact with the magnetic tape are maintained for good recording and reproducing characteristics.

The present invention will become apparent from the following description when taken in conjunction with the accompanying drawings which illustrate preferred embodiments of the present invention by way of example.

### BRIEF DESCRIPTION OF THE DRAWINGS

FIG. 1 is a perspective view of a magnetic head according to an embodiment of the present invention;
FIG. 2 is an enlarged perspective view of head tips of the magnetic head shown in FIG. 1;
FIG. 3 is a perspective view of a magnetic recording and reproducing apparatus which incorporates the magnetic head shown in FIG. 1;
FIGS. 4A and 4B are diagrams showing the waveform envelopes of reproduced output of the head tips shown in FIG. 2;
FIGS. 5A and 5B are diagrams showing the waveform envelopes of reproduced outputs from head tips according to a comparative example;
FIG. 6 is a perspective view of a magnetic head according to another embodiment of the present invention;
FIG. 7 is an enlarged perspective view of head tips of the magnetic head shown in FIG. 6;
FIGS. 8A through 8C are diagrams showing the waveform envelopes of reproduced output of the head tips shown in FIG. 7; and
FIGS. 9A through 9C are diagrams showing the waveform envelopes of reproduced outputs from head tips according to another comparative example.

### DETAILED DESCRIPTION OF THE PREFERRED EMBODIMENTS

Wear resistance of magnetic heads is evaluated in terms of specific wear which is represented by a volume worn per unit running time. More specifically, the specific wear is determined by a wear test. In the wear test, magnetic heads of various materials are mounted on a rotary head drum or cylinder in a magnetic recording and reproducing system, the magnetic heads having equal radii of curvature and project to equal degrees at their tip ends, and the volumes worn of the magnetic heads after a magnetic tape has run against the magnetic heads for a predetermined period of time are divided by the distance the magnetic tape has run. The specific wear is represented by the quotinent. The specific wear of the magnetic heads depends on the magnetic tape used with the magnetic heads and the material of the magnetic heads. The volumes which are worn are determined by measuring the dimensions of the magnetic heads with a feeler-type surface roughness meter before and after the wear test, and the differenceS between the measured volumes are calculated.

In the present invention, a wear test was conducted using a VHS-format VTR deck, with magnetic heads of various materials mounted on the rotary head drum. The specific wear of the magnetic heads was measured by dividing the volumes worn of the magnetic heads after a commercially available S-VHS video tape has run against the magnetic heads in the VTR deck for 100 hours, by the distance the video tape has run (the distance = the running time × the relative velocity between the magnetic heads and the video tape).

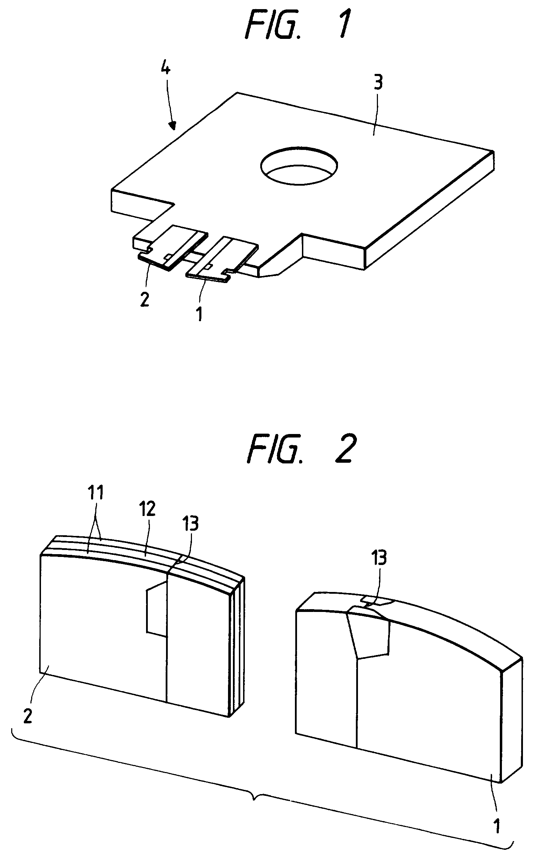

FIG. 1 shows a multitrack combination magnetic head according to an embodiment of the present invention. The magnetic head, generally designated by the reference numeral 4, comprises a pair of leading and trailing head tips 1, 2 mounted on an edge of a head base 3 at a spaced interval. The leading head tip 1 first comes into sliding contact with a magnetic video tape, as described later on. The leading head tip 1 is made of Mn-Zn (manganese-zinc) ferrite whose specific wear has a value of 5.0 × 10⁻¹⁸m. As shown in FIG. 2, the trailing head tip 2 is of a laminated structure comprising a magnetic body or layer 12 of cobalt-base amorphous alloy which serves as a magnetic path and is sandwiched between nonmagnetic substrates 11 each made of an NiO-TiO₂-MgO (nickel oxide-titanium dioxide-magnesium oxide) ceramic material whose specific wear has a value of 7.2 × 10⁻¹⁸m. Each of the leading and trailing head tips 1, 2 has a magnetic gap 13.

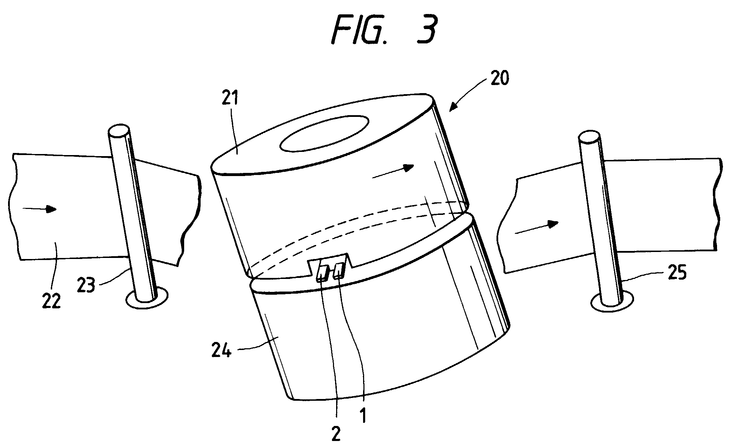

FIG. 3 shows a magnetic recording and reproducing apparatus which incorporates the magnetic head shown in FIG. 1. The magnetic recording and reproducing apparatus includes a rotary head drum or cylinder assembly 20 which comprises an upper rotary head drum or cylinder 21 and a lower rotary head drum 24. The magnetic head 4 is disposed between the upper rotary head drum 21 and the lower rotary head drum 24 and positioned in a window or recess defined in the outer circumferential surface of the upper rotary head drum 21, with the head tips 1, 2 projecting from the outer circumferential surfaces of the rotary head drums 21, 24. A magnetic video tape 22 is guided by inclined guide posts 23, 25 disposed one on each side of the rotary head drum assembly 20, so that the magnetic video tape 22 runs against the outer circumferential surface of the rotary head drum assembly 20. The head tips 1, 2 serve as leading and trailing heads, respectively, when the magnetic video tape 24 runs in the same direction as the direction in which a rotary head drum assembly 20 rotates. Therefore, the leading head tip 1 is brought into sliding contact with the magnetic video tape 22 earlier than the trailing head tip 2.

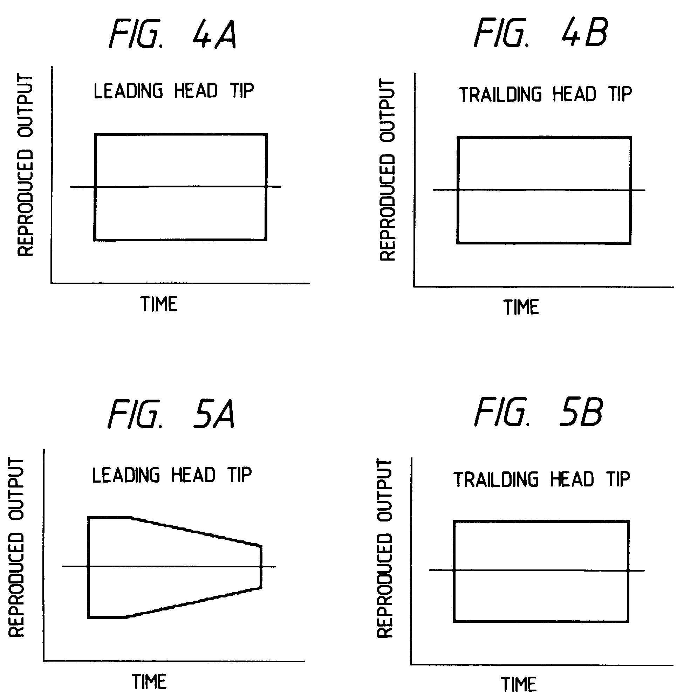

With a conventional multitrack combination magnetic head having leading and trailing head tips of the same material, the leading head tip is contacted by a magnetic video tape under higher pressure than the trailing head tip. Therefore, the leading head tip wears more rapidly into a greater transverse radius of curvature than the trailing head tip. When a thinner magnetic video tape is played back by the conventional combination magnetic head, the leading head tip is not held in good contact with the magnetic video tape, and its reproduced output decreases in level. FIG. 5A shows the waveform envelope of the reproduced output of the leading head tip of the conventional combination magnetic head, whereas FIG. 5B shows the waveform envelope of the reproduced output of the trailing head tip thereof. It can be seen from FIGS. 5A and 5B that the reproduced output of the leading head tip becomes progressively lower in level with time.

According to the present invention, however, the leading head tip 1 and the trailing head tip 2 wear to substantially equal degrees because of their materials. Therefore, the transverse radii of curvature of the leading and trailing head tips 1, 2 are substantially the same as each other, and these leading and trailing head tips 1, 2 produce output levels that are essentially the same as each other. The waveform envelopes of the reproduced outputs of the leading and trailing head tips 1, 2 are substantially equal to each other and remain substantially constant with time, as shown in FIGS. 4A and 4B.

Another combination magnetic head according to the present invention may have a leading head tip of a laminated structure comprising a magnetic body or layer sandwiched between substrates each of a TiO₂-MgO (titanium dioxide-magnesium oxide) ceramic material whose specific wear has a value of 8.3 × 10⁻¹⁸m, and a trailing tip of a laminated structure comprising a magnetic body sandwiched between substrates each of a TiO₂-CaO (titanium dioxide-calcium oxide) ceramic material whose specific wear has a value of 15 × 10⁻¹⁸m.

Single-crystal materials wear to different degrees depending on the orientations of crystal faces. For example, the (111) face of single-crystal ferrite has greater specific wear, but the (110) face thereof has smaller specific wear. Therefore, a combination magnetic head may comprise a leading head tip of ferrite which has a surface for sliding contact with a magnetic video tape, the surface being the (110) face of ferrite, and a trailing head tip of ferrite whose surface for sliding contact with the magnetic video tape is the (111) face of ferrite.

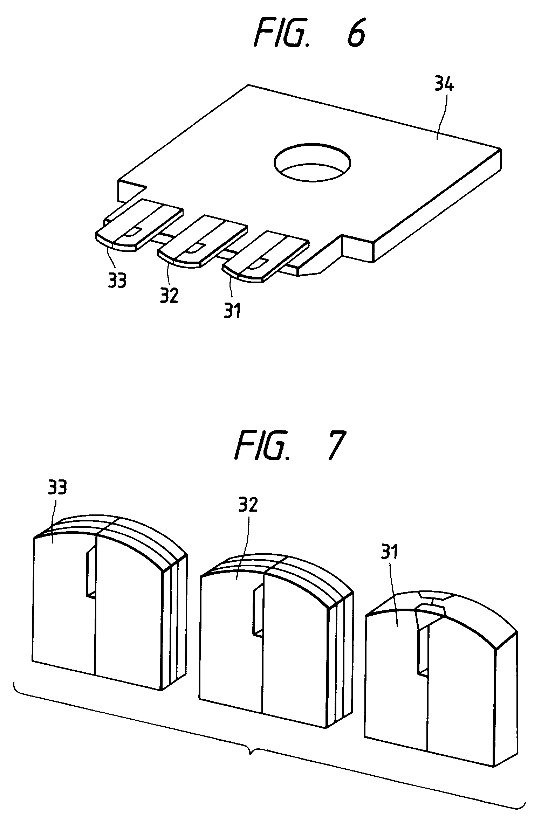

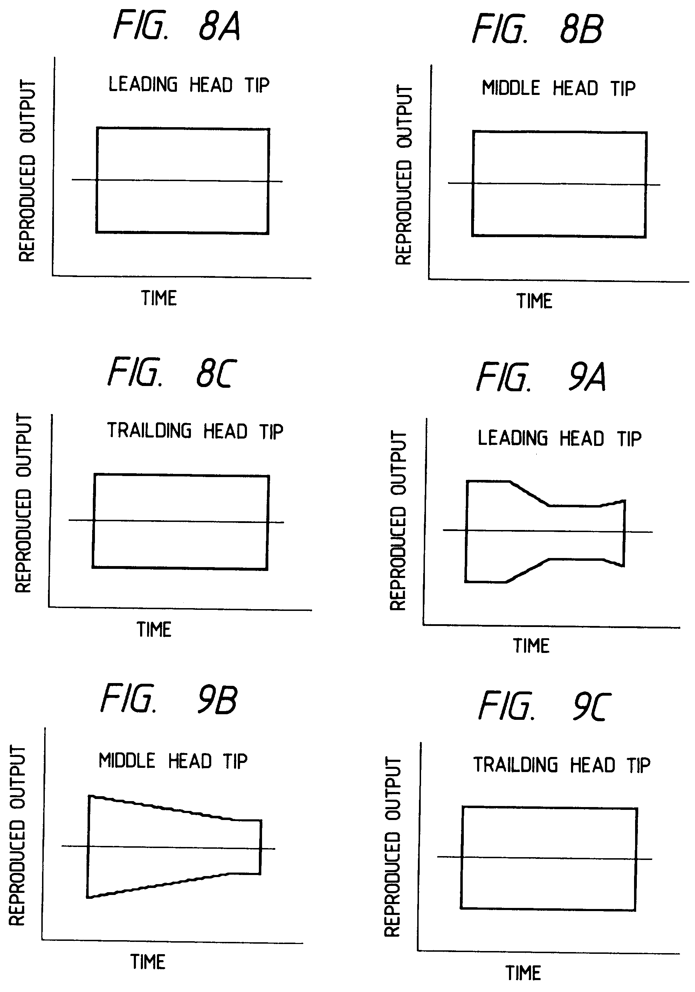

FIG. 6 shows a multitrack combination magnetic head according to another embodiment of the present invention, the multitrack magnetic head having three head tips. FIG. 7 shows the head tips at enlarged scale.

As shown in FIGS. 6 and 7, the magnetic head, generally designated by the reference numeral 35, comprises a leading head tip 31, a middle head tip 32, and a trailing head tip 33 which are positioned at spaced intervals and mounted on an edge of a head base 34. The magnetic head 35 is mounted on a rotary head drum or cylinder assembly, similar to the rotary head drum assembly 20 shown in FIG. 3, so that the leading head tip 31 comes into sliding contact with the magnetic video tape earlier than the middle and trailing head tips 32, 33.

The leading head tip 31 is made of Mn-Zn ferrite whose specific wear has a value of 5.0 × 10⁻¹⁸m. The middle head tip 32 is of a laminated structure comprising a magnetic body which serves as a magnetic path and is sandwiched between nonmagnetic substrates each made of an NiO-TiO₂-MgO ceramic material whose specific wear has a value of 7.2 × 10⁻¹⁸m. The trailing head tip 33 is also of a laminated structure comprising a magnetic body which serves as a magnetic path and is sandwiched between nonmagnetic substrates each made of a TiO₂-BaO (titanium dioxide-barium oxide) ceramic material whose specific wear has a value of 10 × 10⁻¹⁸m.

With a conventional multitrack combination magnetic head having leading, middle, and trailing head tips of the same material, the leading head tip is contacted by a magnetic video tape under higher pressure than the middle and trailing head tips. Therefore, the leading head tip wears more rapidly into a greater transverse radius of curvature than the trailing head tip. When a thinner magnetic video tape is played back by the conventional multitrack combination magnetic head after a thicker magnetic video tape has been played back thereby, the leading head tip is not held in good contact with the magnetic video tape, and its reproduced output decreases in level. FIGS. 9A and 9B show the waveform envelopes of the reproduced outputs of the leading and middle head tips of the conventional multitrack combination magnetic head, whereas FIG. 9C shows the waveform envelope of the reproduced output of the trailing head tip thereof. It can be seen from FIGS. 9A, 9B, and 9C that the reproduced outputs of the leading and middle head tips become progressively lower in level with time.

According to the present invention, the leading, middle, and trailing head tips 31, 32, 33 have progressively lower wear resistances, and hence their projecting portions wear to substantially equal degrees and have substantially equal radii of curvature in the transverse direction. Therefore, the leading, middle, and trailing head tips 31, 32, 33 produce output levels that are essentially the same as each other. The waveform envelopes of the reproduced outputs of the leading, middle, and trailing head tips 31, 32, 33 are substantially equal to each other and remain substantially constant with time, as shown in FIGS. 8A, 8B, and 8C. Inasmuch as the projecting portions of the leading, middle, and trailing head tips 31, 32, 33 wear substantially equally, the tape running times until they are worn to the gap depth are substantially the same as each other. As a consequence, the leading, middle, and trailing head tips 31, 32, 33 have substantially equal service lives.

Another multitrack combination magnetic head according to the present invention may comprise leading, middle, and trailing head tips each comprising a magnetic body which serves as a magnetic path and is sandwiched between nonmagnetic substrates. The substrate of the leading head tip is made of TiO₂-MgO ceramic material whose specific wear has a value of 8.3 × 10⁻¹⁸m, the substrate of the middle head tip is made of TiO₂-CaO ceramic material whose specific wear has a value of 15 × 10⁻¹⁸m, and the substrate of the trailing head tip is made of NiO-MnO (nickel oxide-manganese oxide) ceramic material whose specific wear has a value of 19 × 10⁻¹⁸m.

Furthermore, still another multitrack combination magnetic head according to the present invention may include a leading head tip of Mn-Zn ferrite and successive head tips each comprising a magnetic body serving as a magnetic path and sandwiched between any nonmagnetic substrates whose specific wear is greater than that of Mn-Zn ferrite.

According to a further modification, a multitrack combination magnetic head may comprise a bulk-type leading dummy head tip of Mn-Zn ferrite, a head tip of Mn-Zn ferrite which follows the bulk-type leading dummy head, and a trailing head tip comprising a magnetic body serving as a magnetic path and sandwiched between nonmagnetic substrates whose specific wear is greater than that of Mn-Zn ferrite.

Alternatively, a multitrack combination magnetic head may comprise three head tips having different values of specific wear which are achieved by employing different faces of single-crystal ferrite or substrate material.

While two or three head tips have been shown and described in the above embodiments, a multitrack combination magnetic head may comprise four or more head tips positioned in a window or recess defined in the outer circumferential surface of a rotary head drum assembly.

A magnetic head according to the present invention may be of any of various configurations insofar as the values of specific wear of the head tips are progressively greater from the leading head tip toward the trailing head tip with respect to the direction in which the rotary head drum assembly rotates.

The principles of the present invention are applicable to not only a laminated multitrack combination magnetic head, but also a bulk-type ferrite magnetic head and a metal-in-gap magnetic head. The multitrack magnetic head according to the present invention may be incorporated in not only a magnetic recording and reproducing system with a rotary head drum assembly, but also a magnetic recording and reproducing system with a rotary head drum rotatable between two fixed drums or cylinders, or a magnetic recording and reproducing system with a fixed magnetic head against which a magnetic tape runs at high speed.

## Claims

1. A multitrack magnetic head for use with a magnetic tape in a helical scan tape recorder, comprising:
at least two magnetic head tips (1, 2) disposed adjacent to each other, said head tips being movable with respect to the magnetic tape and including a leading head tip (1) for initial sliding contact with the magnetic tape and a trailing head tip (2) for subsequent sliding contact with the magnetic tape; characterised by
said leading head tip being made of a material whose wear resistance is greater than that of a material of which said trailing head tip is made, whereby the combination of Ferrite as the leading head tip material and Sendust as the trailing head tip material is excluded.

2. A multitrack magnetic head according to claim 1, wherein only two magnetic head tips are positioned in a recess defined in a rotary head drum (20), said two magnetic head tips comprising said leading and trailing head tips, respectively.

3. A multitrack magnetic head according to claim 2, wherein said leading head tip (1) is made of ferrite, and said trailing head tip (2) is of a laminated structure comprising a magnetic body serving as a magnetic path and a a pair of nonmagnetic substrates sandwiching said magnetic body, each of said nonmagnetic substrates being made of a material whose wear resistance is lower than that of ferrite.

4. A multitrack magnetic head according to claim 2, wherein each of said leading and trailing head tips (1, 2) is of a laminated structure comprising a magnetic body (12) serving as a magnetic path and a a pair of nonmagnetic substrates (11) sandwiching said magnetic body, each of said nonmagnetic substrates being made of a material whose wear resistance is lower than that of ferrite.

5. A multitrack magnetic head according to claim 1, wherein at least three magnetic head tips (31, 32, 33) are positioned in a recess defined in a rotary head drum (20), said three magnetic head tips including said leading and trailing head tips, respectively.

6. A multitrack magnetic head according to claim 5, wherein said leading head tip is made of ferrite, and each of the other head tips is of a laminated structure comprising a magnetic body (12) serving as a magnetic path and a pair of nonmagnetic substrates (11) sandwiching said magnetic body, each of said nonmagnetic substrates being made of a material whose wear resistance is lower than that of ferrite.

7. A multitrack magnetic head according to claim 5, wherein each of the head tips is of a laminated structure comprising a magnetic body (12) serving as a magnetic path and a a pair of nonmagnetic substrates (11) sandwiching said magnetic body, said nonmagnetic substrates being made of materials whose wear resistances are progressively lower from said leading head tip (31) toward said trailing head tip (33).

8. A multitrack magnetic head according to claim 5, wherein said leading head tip (31) comprises a dummy head tip of ferrite, and each of the other head tips (32, 33) is of a laminated structure comprising a magnetic body (12) serving as a magnetic path and a pair of nonmagnetic substrates (11) sandwiching said magnetic body, each of said nonmagnetic substrates being made of a material whose wear resistance is lower than that of ferrite.

## Patentansprüche

1. Ein Mehrspurmagnetkopf zur Verwendung mit einem Magnetband in einem Bandrecorder schraubenförmiger Abtastung mit:
wenigstens zwei Magnetkopfspitzen (1, 2), die zueinander benachbart angeordnet sind, wobei die Kopfspitzen bezüglich des Magnetbandes bewegbar sind und eine vordere Kopfspitze (1) zum anfänglichen gleitenden Kontakt mit dem Magnetband und eine hintere Kopfspitze (2) zum nachfolgenden gleitenden Kontakt mit dem Magnetband umfassen;
dadurch **gekennzeichnet,**
daß die vordere Kopfspitze aus einem Material hergestellt ist, dessen Verschleißwiderstand größer als der eines Materials ist, aus welchem die hintere Kopfspitze hergestellt ist, wodurch die Kombination von Ferrit als das Material der vorderen Kopfspitze und Sendust als das Material der hinteren Kopfspitze ausgeschlossen ist.

2. Ein Mehrspurmagnetkopf nach Anspruch 1,
worin nur zwei Magnetkopfspitzen in einer Ausnehmung positioniert sind, die in einer Drehkopftrommel (20) definiert ist, wobei die zwei Magnetkopfspitzen die vorderen bzw. hinteren Kopfspitzen umfassen.

3. Ein Mehrspurmagnetkopf nach Anspruch 2,
worin die vordere Kopfspitze (1) aus Ferrit und die hintere Kopfspitze (2) aus einer laminierten Struktur hergestellt ist, die einen Magnetkörper, der als ein Magnetweg dient, und ein Paar nichtmagnetische Substrate umfaßt, zwischen denen der Magnetkörper in sandwichbauweise angeordnet ist, wobei jedes der nichtmagnetischen Substrate aus einem Material hergestellt ist, dessen Verschleißwiderstand geringer als der von Ferrit ist.

4. Ein Mehrspurmagnetkopf nach Anspruch 2,
worin jede der vorderen und hinteren Kopfspitzen (1, 2) aus einer laminierten Struktur besteht, die einen Magnetkörper (12), der als ein Magnetweg dient, und ein Paar nichtmagnetische Substrate (11) umfaßt, zwischen denen der Magnetkörper in sandwichbauweise angeordnet ist, wobei jedes der nichtmagnetischen Substrate aus einem Material hergestellt ist, dessen Verschleißwiderstand geringer als der von Ferrit ist.

5. Ein Mehrspurmagnetkopf nach Anspruch 1,
worin wenigstens drei Magnetkopfspitzen (31, 32, 33) in einer Ausnehmung positioniert sind, die in einer Drehkopftrommel (20) definiert ist, wobei die drei Magnetkopfspitzen die vorderen bzw. hinteren Kopfspitzen umfassen.

6. Ein Mehrspurmagnetkopf nach Anspruch 5,
worin die vordere Kopfspitze aus Ferrit und jede der anderen Kopfspitzen aus einer laminierten Struktur hergestellt ist, die einen Magnetkörper (12), der als ein Magnetweg dient, und ein Paar nichtmagnetische Substrate (11) umfaßt, zwischen denen der Magnetkörper in sandwichbauweise angeordnet ist, wobei jedes der nichtmagnetischen Substrate aus einem Material hergestellt ist, dessen Verschleißwiderstand geringer als der von Ferrit ist.

7. Ein Mehrspurmagnetkopf nach Anspruch 5,
worin jede der Kopfspitzen aus einer laminierten Struktur besteht, die einen Magnetkörper (12), der als ein Magnetweg dient, und ein Paar nichtmagnetische Substrate (11) umfaßt, zwischen denen der Magnetkörper in sandwichbauweise angeordnet ist, wobei die nichtmagnetischen Substrate aus Materialien hergestellt sind, deren Verschleißwiderstände fortschreitend geringer von der vorderen Kopfspitze (31) zur hinteren Kopfspitze (33) sind.

8. Ein Mehrspurmagnetkopf nach Anspruch 5,
worin die vordere Kopfspitze (31) eine Attrappenkopfspitze aus Ferrit umfaßt, und jede der anderen Kopfspitzen (32, 33) aus einer laminierten Struktur besteht, die einen Magnetkörper (12), der als ein Magnetweg dient, und ein Paar nichtmagnetische Substrate (11) umfaßt, zwischen denen der Magnetkörper in sandwichbauweise angeordnet ist, wobei jedes der nichtmagnetischen Substrate aus einem Material hergestellt ist, dessen Verschleißwiderstand geringer als der von Ferrit ist.

## Revendications

1. Tête magnétique multipiste destinée à être utilisée avec une bande magnétique dans un appareil d'enregistrement/reproduction de bande à balayage hélicoïdal comprenant:
au moins deux extrémités (1, 2) de tête magnétique disposées au voisinage l'une de l'autre, lesdites extrémités de tête pouvant être déplacées par rapport à la bande magnétique et comprenant une extrémité avant (1) de tête destinée à un contact de glissement initial avec la bande magnétique et une extrémité arrière (2) destinée à un contact de glissement ultérieur avec la bande magnétique; caractérisée par le fait que ladite extrémité avant de tête est constituée par un matériau dont la résistance à l'usure est supérieure à celle du matériau dont est constituée ladite extrémité arrière de tête, ce qui fait que la combinaison de ferrite, en tant que matériau d'extrémité de tête avant, et de sendust, en tant que matériau d'extrémité arrière de tête, est exclue.

2. Tête magnétique multipiste selon la revendication 1, dans laquelle deux extrémités de tête magnétique seulement sont positionnées dans un évidement défini dans un tambour de tête rotatif (20), lesdites deux extrémités de tête magnétique comprenant lesdites extrémités avant et arrière de tête, respectivement.

3. Tête magnétique multipiste selon la revendication 2, dans lequel ladite extrémité avant (1) de tête est formée de ferrite, et ladite extrémité arrière (2) de tête a une structure stratifiée comprenant un corps magnétique servant de circuit magnétique et une paire de substrats non magnétiques serrant entre eux ledit corps magnétique, chacun desdits substrats non magnétiques étant formé d'un matériau dont la résistance à l'usure est inférieure à celle du ferrite.

4. Tête magnétique multipiste selon la revendication 2, dans laquelle chacune desdites extrémités avant et arrière (1, 2) de tête est formée par une structure stratifiée comprenant un corps magnétique (12) servant de circuit magnétique et une paire de substrats non magnétiques (11) serrant entre eux ledit corps magnétique, chacun desdits substrats non magnétiques étant formé d'un matériau dont la résistance à l'usure est inférieure à celle du ferrite.

5. Tête magnétique multipiste selon la revendication 1, dans laquelle au moins trois extrémités magnétiques (31, 32, 33) de tête sont positionnées dans un évidement défini dans un tambour rotatif (20) de tête, lesdites extrémités de tête magnétique comprenant lesdites extrémités avant et arrière de tête, respectivement.

6. Tête magnétique multipiste selon la revendication 5, dans laquelle ladite extrémité avant de tête est formée de ferrite, et chacune des autres extrémités de tête est formée par une structure stratifiée comprenant un corps magnétique (12) servant de circuit magnétique et une paire de substrats non magnétiques (11) serrant entre eux ledit corps magnétique, chacun desdits substrats non magnétiques étant formé d'un matériau dont la résistance à l'usure est inférieure à celle du ferrite.

7. Tête magnétique multipiste selon la revendication 5, dans laquelle chacune des extrémités de tête a une structure stratifiée comprenant un corps magnétique (12) servant de circuit magnétique et une paire de substrats non magnétiques (11) serrant entre eux ledit corps magnétique, lesdits substrats non magnétiques étant formés de matériaux dont les résistances à l'usure sont progressivement inférieure depuis ladite extrémité avant (31) de tête vers ladite extrémité arrière (33) de tête.

8. Tête magnétique multipiste selon la revendication 5, dans laquelle ladite extrémité avant (31) de tête comprend une fausse extrémité de tête en ferrite, et chacune des autres extrémités (32, 33) de tête a une structure stratifiée comprenant un corps magnétique (12) servant de circuit magnétique et une paire de substrats non magnétiques (11) serrant entre eux ledit corps magnétique, chacun desdits substrats non magnétiques étant formé d'un matériau dont la résistance à l'usure est inférieure à celle de la ferrite.
